# EUROPEAN PATENT APPLICATION

(11) **EP 4 349 483 A1**
(43) Date of publication of application: **10.04.2024**
(21) Application number: 22845708.1
(22) Date of filing: 10.06.2022
(51) Int. Cl.: B01J 35/04, B01D 53/94, F01N 3/10, F01N 3/24, B01J 23/89

(54) **EXHAUST GAS PURIFICATION CATALYST**

(30) Priority: 19.07.2021 JP 2021118730
(71) Applicant: CATALER CORPORATION, Kakegawa-shi, Shizuoka 437-1492 (JP)
(72) Inventor: HIRAO, Tetsuhiro, Kakegawa-shi, Shizuoka 437-1492 (JP); OSEKI, Takehisa, Kakegawa-shi, Shizuoka 437-1492 (JP); TODA, Yosuke, Kakegawa-shi, Shizuoka 437-1492 (JP)
(74) Representative: Kramer Barske Schmidtchen Patentanwälte PartG mbB
(86) International application number: PCT/JP2022/023455
(87) International publication number: WO 2023/002772

(57) **Abstract**

According to the present invention, a novel exhaust gas purifying catalyst with HC and CO purification performance improved in a rich atmosphere is provided. The exhaust gas purifying catalyst disclosed herein includes a base material, a catalyst layer provided on the base material, and a reforming reaction layer provided on the base material. The catalyst layer includes a three-way catalyst. The reforming reaction layer includes a hydrogen generation catalyst. The reforming reaction layer is disposed at a position on a downstream side in a flowing direction of an exhaust gas relative to the catalyst layer.

## Description

### [Technical Field]

The present invention relates to an exhaust gas purifying catalyst. The present application claims priority based on Japanese Patent Application No. 2021-118730 filed on July 19, 2021, the entire contents of which application are incorporated herein by reference.

### [Background Art]

The exhaust gas emitted from an internal-combustion engine such as a vehicle engine includes harmful components such as hydrocarbon (HC), carbon monoxide (CO), and nitrogen oxide (NOx). For efficient capture and removal of these harmful components from the exhaust gas, exhaust gas purifying catalysts have been used conventionally.

Patent Literature 1 is cited as the conventional technical literature related to the exhaust gas purifying catalysts. As described in Patent Literature 1, the exhaust gas purifying catalyst typically includes a three-way catalyst as a catalyst that can efficiently remove the aforementioned harmful components at the same time. Moreover, Patent Literature 1 discloses an exhaust gas processing system in which a catalyst containing nickel or palladium is used as a fuel reforming catalyst.

### [Citation List]

### [Patent Literature]

[Patent Literature 1] Japanese Translation of PCT International Application Publication No. 2016-513198

### [Summary of Invention]

### [Technical Problem]

In recent years, exhaust gas regulations have become stricter as typified by the regulations of LEV III, Euro 7, and the like. To deal with such regulations, not just reduction of emissions at cold start but also reduction of emissions at hot start (hereinafter also referred to as "hot emission") is required.

The exhaust gas is purified by the three-way catalyst through a ternary reaction (that is, oxidation ofHC, oxidation of CO, and reduction ofNOx). Since the reduction ofNOx progresses less easily in a lean atmosphere with excessive oxygen, an exhaust gas purifying system can be subjected to feedback (FB) control in a stoichiometric to light-rich atmosphere. For this control, the atmosphere shifts to a rich side at rich spike after F/C or a high-load driving, for example. In the rich atmosphere, oxygen is insufficient and HC and CO cannot be oxidized sufficiently; as a result, a part of HC and CO is not purified and may be discharged. Since oxygen is much consumed in an upstream part in a flowing direction of the exhaust gas in an exhaust gas purifying catalyst, oxygen tends to be insufficient in a downstream part particularly in the rich atmosphere. Additionally due to such a factor, a part of HC and CO is not purified and may be discharged. Thus, in order to reduce the hot emission, it has been required to improve the purification performance for HC and CO in the rich atmosphere of the exhaust gas purifying catalyst.

The present invention has been made in view of the above circumstances, and an object thereof is to provide a novel exhaust gas purifying catalyst with improved purification performance for HC and CO in a rich atmosphere.

### [Solution to Problem]

An exhaust gas purifying catalyst disclosed herein includes a base material, a catalyst layer provided on the base material, and a reforming reaction layer provided on the base material. The catalyst layer includes a three-way catalyst. The reforming reaction layer includes a hydrogen generation catalyst. The reforming reaction layer is disposed at a position on a downstream side in a flowing direction of an exhaust gas relative to the catalyst layer.

The hydrogen generation catalyst is a catalyst that, by using water, converts HC and CO into Hz by a steam reforming reaction (HC + H₂O → CO₂ + H₂) and a CO shift reaction (CO + H₂O → CO₂ + H₂). Water is generated in combustion of a fuel (typically, gasoline) or oxidation of HC and therefore, exists abundantly in the exhaust gas. Therefore, by such a constitution, the reforming reaction layer can convert HC and CO into carbon dioxide and H₂ using water instead of oxygen. Thus, in the exhaust gas purifying catalyst, by disposing the reforming reaction layer at the position on the downstream side in the flowing direction of the exhaust gas relative to the catalyst layer, HC and CO can be removed with a high purifying ratio even if oxygen is insufficient. That is to say, by the constitution as described above, the novel exhaust gas purifying catalyst with the HC and CO purification performance improved in the rich atmosphere can be provided.

In a preferred aspect of the exhaust gas purifying catalyst disclosed herein, the hydrogen generation catalyst includes an oxide of at least one kind of element selected from the group consisting of Pr, Nd, Co, and Ni. By this constitution, the HC and CO purification performance in the rich atmosphere by the exhaust gas purifying catalyst becomes higher.

In a preferred aspect of the exhaust gas purifying catalyst disclosed herein, the hydrogen generation catalyst includes nickel oxide. By this constitution, the HC and CO purification performance in the rich atmosphere by the exhaust gas purifying catalyst becomes particularly high.

In a preferred aspect of the exhaust gas purifying catalyst disclosed herein, the reforming reaction layer further includes an OSC material with oxygen storage capacity. By this constitution, a hydrogen generation reaction (the steam reforming reaction and/or the CO shift reaction) by the hydrogen generation catalyst can be promoted by the OSC material and the HC and CO purification performance in the rich atmosphere by the exhaust gas purifying catalyst becomes particularly high.

In a preferred aspect of the exhaust gas purifying catalyst disclosed herein, a content of the hydrogen generation catalyst in the reforming reaction layer is 5 g/L or more per liter of a volume of a part of the base material where the reforming reaction layer is formed. By this constitution, the HC and CO purification performance in the rich atmosphere by the exhaust gas purifying catalyst becomes particularly high.

In a preferred aspect of the exhaust gas purifying catalyst disclosed herein, the reforming reaction layer further includes Rh. By this constitution, CO, HC, and NOx can be removed at a high purifying ratio in a well-balanced manner.

### [Brief Description of Drawings]

Fig. 1 is a schematic view of an exhaust gas purifying system in which an exhaust gas purifying catalyst is used.
Fig. 2 is a perspective view schematically illustrating the exhaust gas purifying catalyst in Fig. 1.
Fig. 3 is a cross-sectional view of the exhaust gas purifying catalyst in Fig. 2 taken along a cylinder axis direction.
Fig. 4 is a cross-sectional view of an exhaust gas purifying catalyst according to a modification taken along the cylinder axis direction.
Fig. 5 is a graph expressing a relation between an air-fuel ratio (A/F) and a CO purifying ratio in Test Example 1.
Fig. 6 is a graph expressing a relation between the air-fuel ratio (A/F) and a THC purifying ratio in Test Example 1.
Fig. 7 is a graph expressing a comparison of the CO purifying ratio and the THC purifying ratio when the air-fuel ratio (A/F) is 14.2 in Test Example 1.
Fig. 8 is a graph expressing the comparison of the CO purifying ratio and the THC purifying ratio when the air-fuel ratio (A/F) is 14.2 in Test Example 2.
Fig. 9 is a graph expressing the comparison of the CO purifying ratio and the THC purifying ratio when the air-fuel ratio (A/F) is 14.2 in Test Example 3.
Fig. 10 is a graph expressing the comparison of the CO purifying ratio and the THC purifying ratio when the air-fuel ratio (A/F) is 14.2 in Test Example 4.
Fig. 11 is a graph expressing the comparison of the CO purifying ratio and the THC purifying ratio when the air-fuel ratio (A/F) is 14.2 in Test Example 5.

### [Description of Embodiments]

Preferred embodiments of the present invention will be described below with reference to the drawings. Incidentally, matters other than matters particularly mentioned in the present specification and necessary for the implementation of the present invention can be grasped as design matters of those skilled in the art based on the prior art in the relevant field. The present invention can be carried out based on the contents disclosed in this specification and technical common sense in the field. In the drawings below, the members and parts with the same action are denoted with the same reference sign and the overlapping description may be omitted or simplified. The dimensional relation (length, width, thickness, and the like) in each drawing does not always reflect the actual dimensional relation. In the present specification, the notation "A to B" (A and B are arbitrary numerals) for a range signifies a value more than or equal to A and less than or equal to B.

### «Exhaust gas purifying system»

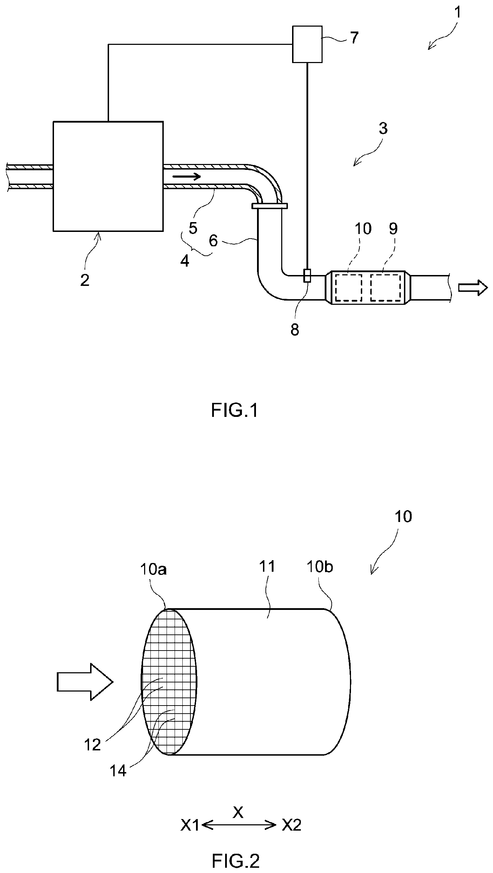

Fig. 1 is a schematic view of an exhaust gas purifying system 1. The exhaust gas purifying system 1 includes an internal-combustion engine (engine) 2, an exhaust gas purifying device 3, and an engine control unit (ECU) 7. The exhaust gas purifying system 1 is configured to purify an unburnt component in the exhaust gas emitted from the internal-combustion engine 2, such as HC, CO, or NOx, in the exhaust gas purifying device 3. Note that an arrow in Fig. 1 indicates a flowing direction of the exhaust gas. In the description below, along the flow of the exhaust gas, a side closer to the internal-combustion engine 2 is referred to as an upstream side and a side farther from the internal-combustion engine 2 is referred to as a downstream side.

The internal-combustion engine 2 is configured here using a gasoline engine of a gasoline vehicle as a main body. The internal-combustion engine 2 may alternatively be an engine other than the gasoline engine, for example, a diesel engine, an engine mounted on a hybrid vehicle, or the like. The internal-combustion engine 2 includes a combustion chamber (not illustrated). The combustion chamber is connected to a fuel tank (not illustrated). The fuel tank stores gasoline here. The fuel to be stored in the fuel tank may alternatively be diesel fuel (light oil) or the like. In the combustion chamber, the fuel supplied from the fuel tank is mixed with oxygen and combusted. Thus, combustion energy is converted into mechanical energy. The combustion chamber communicates with an exhaust port. The exhaust port communicates with the exhaust gas purifying device 3. The combusted fuel gas turns into the exhaust gas, which is then emitted to the exhaust gas purifying device 3. The exhaust gas includes the unburnt component (harmful components).

The exhaust gas purifying device 3 includes an exhaust path 4 that communicates with the internal-combustion engine 2, an oxygen sensor 8, a first catalyst 10, and a second catalyst 9. The exhaust path 4 is an exhaust gas flow channel where the exhaust gas flows. The exhaust path 4 includes an exhaust manifold 5 and an exhaust pipe 6 here. An upstream end part of the exhaust manifold 5 is connected to the exhaust port of the internal-combustion engine 2. A downstream end part of the exhaust manifold 5 is connected to the exhaust pipe 6. In the middle of the exhaust pipe 6, the first catalyst 10 and the second catalyst 9 are disposed in this order from the upstream side. However, the arrangement of the first catalyst 10 and the second catalyst 9 may be arbitrarily changed. Moreover, the number of first catalysts 10 and the number of second catalysts 9 are not limited in particular and each of them may be more than one. Furthermore, the second catalyst 9 is not always necessary and can be omitted in another embodiment.

The first catalyst 10 is, here, a catalyst that is brought into contact with the exhaust gas firstly. The first catalyst 10 has a function of purifying the harmful components in the exhaust gas, HC, CO, and NOx, which will be described later in detail. The first catalyst 10 is one example of "exhaust gas purifying catalyst" disclosed herein. Note that the first catalyst 10 may be referred to as "exhaust gas purifying catalyst" below. The structure of the first catalyst (exhaust gas purifying catalyst) 10 will be described later in detail. The second catalyst 9 may be the same as or similar to the conventional one, and is not limited in particular. For example, the second catalyst 9 may be a three-way catalyst that purifies HC, CO, and NOx included in the exhaust gas at the same time, a gasoline particulate filter (GPF) that removes PM included in the exhaust gas, or the like.

Note that on the upstream side of the first catalyst 10, a catalyst whose structure is different from those of the first catalyst 10 and the second catalyst 9 may be further disposed. Examples thereof include a diesel particulate filter (DPF) that removes PM included in the exhaust gas, a diesel oxidation catalyst (DOC) that purifies HC or CO included in the exhaust gas, a NOx storage-reduction (NSR) catalyst that stores NOx in the normal driving (in a lean condition) and purifies NOx using HC or CO as a reducing agent when more fuel is injected (in a rich atmosphere), and the like.

When the first catalyst 10 purifies HC and CO, hydrogen (Hz) is generated, which will be described later. This hydrogen is typically discharged out of the exhaust gas purifying system 1, and further to the outside of a vehicle such as an automobile, for example. However, hydrogen may be collected and used but the exhaust gas including hydrogen will not be returned to the internal-combustion engine 2.

The ECU 7 controls the internal-combustion engine 2 and the exhaust gas purifying device 3. The ECU 7 is electrically connected to the internal-combustion engine 2 and a sensor (for example, the oxygen sensor 8, or a temperature sensor, a pressure sensor, or the like that is not illustrated) disposed at each part of the exhaust gas purifying device 3. Note that the structure of the ECU 7 may be the same as or similar to the conventional structure without particular limitations. The ECU 7 is, for example, a processor or an integrated circuit. The ECU 7 includes an input port (not illustrated) and an output port (not illustrated). The ECU 7 receives, for example, information about the operation state of the vehicle and the amount, the temperature, the pressure, and the like of the exhaust gas emitted from the internal-combustion engine 2. The ECU 7 receives information detected by the sensor (for example, the amount of oxygen measured by the oxygen sensor 8) through the input port. The ECU 7 transmits a control signal through the output port on the basis of the received information, for example. The ECU 7 controls the operation, for example, controls the fuel injection or ignition of the internal-combustion engine 2 and controls to regulate the amount of intake air. The ECU 7 controls the operation of the internal-combustion engine 2 so that the air-fuel ratio (A/F) of the exhaust gas is in a stoichiometric state, for example. The ECU 7 controls the driving and stopping of the exhaust gas purifying device 3 on the basis of, for example, the operation state of the internal-combustion engine 2, the amount of the exhaust gas emitted from the internal-combustion engine 2, and the like.

### «Exhaust gas purifying catalyst»

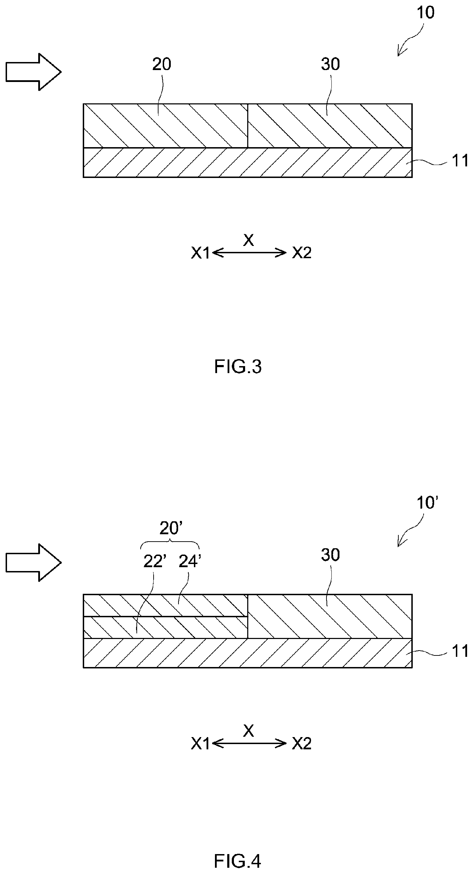

Fig. 2 is a perspective view schematically illustrating the exhaust gas purifying catalyst 10 according to the present embodiment. Fig. 3 is a cross-sectional view schematically illustrating a cross section of the exhaust gas purifying catalyst 10 taken along a cylinder axis direction X. Note that arrows in Fig. 2 and Fig. 3 indicate the flowing direction of the exhaust gas. In Fig. 2 and Fig. 3, the upstream side of the exhaust path 4, which is relatively close to the internal-combustion engine 2, is expressed on the left side and the downstream side of the exhaust path, which is relatively far from the internal-combustion engine 2, is expressed on the right side. Moreover, reference sign X denotes a cylinder axis direction of the exhaust gas purifying catalyst 10. In the cylinder axis direction X, an X1 side corresponds to the upstream side (also referred to as exhaust gas inflow side or front side) and an X2 side corresponds to the downstream side (also referred to as exhaust gas outflow side or rear side). The exhaust gas purifying catalyst 10 is disposed in the exhaust path 4 so that the cylinder axis direction X extends along the flowing direction of the exhaust gas.

The exhaust gas purifying catalyst 10 has a function of purifying the harmful components in the exhaust gas. An end part of the exhaust gas purifying catalyst 10 on the X1 side is an inlet 10a of the exhaust gas and an end part thereof on the X2 side is an outlet 10b of the exhaust gas. The outer shape of the exhaust gas purifying catalyst 10 is circular cylindrical here. However, the outer shape of the exhaust gas purifying catalyst 10 is not limited in particular and may be, for example, an elliptical cylindrical shape, a polygonal cylindrical shape, a pipe-like shape, a foam-like shape, a pellet shape, a fibrous shape, or the like.

As illustrated in Fig. 3, the exhaust gas purifying catalyst 10 includes a base material 11, a catalyst layer 20 formed on the base material 11, and a reforming reaction layer 30 formed on the base material 11. In the exhaust gas purifying catalyst 10, both the catalyst layer 20 and the reforming reaction layer 30 are formed on one base material 11; therefore, the exhaust gas purifying catalyst 10 can have the high purification performance for HC and CO in the rich atmosphere with high space efficiency.

### [Base material]

The base material 11 forms the frame of the exhaust gas purifying catalyst 10. The base material 11 is not particularly limited and various materials and various modes that have conventionally been employed in this type of applications can be used. In the illustrated example, a base material with a straight flow structure is used as the base material 11. The base material 11 may be, for example, a ceramic carrier formed of ceramic such as cordierite, aluminum titanate, or silicon carbide, or a metal carrier formed of stainless steel (SUS), a Fe-Cr-Al-based alloy, a Ni-Cr-Al-based alloy, or the like. As illustrated in Fig. 2, the base material 11 has a honeycomb structure here. The base material 11 includes a plurality of cells (cavities) 12 arrayed regularly in the cylinder axis direction X, and partition walls (ribs) 14 that section the plurality of cells 12. Although not particularly limited, a length (average length) L of the base material 11 along the cylinder axis direction X may be generally 10 to 500 mm, for example 50 to 300 mm. The volume of the base material 11 is 0.1 to 10 L, for example, and may be 0.5 to 5 L. In the present specification, "the volume of the base material" refers to the apparent volume (bulk volume) including the capacity of the cells 12 inside thereof in addition to the volume (pure volume) of the base material 11 itself.

The cell 12 serves as a flow channel for the exhaust gas. The cell 12 extends in the cylinder axis direction X. The cell 12 is a penetration hole penetrating the base material 11 in the cylinder axis direction X. The shape, the size, the number, and the like of the cells 12 may be designed in consideration of, for example, the flow rate, the component, and the like of the exhaust gas flowing in the exhaust gas purifying catalyst 10. The shape of the cross section of the cell 12 that is orthogonal to the cylinder axis direction X is not limited in particular. The cross-sectional shape of the cell 12 may be, for example, a tetragon such as a square, a parallelogram, a rectangle, or a trapezoid, another polygon (such as a triangle, a hexagon, or an octagon), a wavy shape, a circular shape, or various other geometric shapes. The partition wall 14 faces the cell 12 and sections between the adjacent cells 12.

### [Catalyst layer]

As illustrated in Fig. 3, the catalyst layer 20 is disposed on the upstream side in the flowing direction of the exhaust gas relative to the reforming reaction layer 30 in the exhaust gas purifying catalyst 10. In the illustrated example, the catalyst layer 20 is provided so as to be in contact with the reforming reaction layer 30. However, the catalyst layer 20 may be apart from the reforming reaction layer 30 as long as the catalyst layer 20 exists on the base material 11 where the reforming reaction layer 30 is formed.

In the catalyst layer 20, the exhaust gas is purified by a ternary reaction. Therefore, the catalyst layer 20 includes a three-way catalyst. That is to say, the catalyst layer 20 includes a precious metal and a carrier that carries the precious metal. The catalyst layer 20 can be configured similarly to a known catalyst layer including the three-way catalyst.

The precious metal is a catalyst metal that purifies the harmful components in the exhaust gas. The precious metal is not limited in particular, and may be a known precious metal that is used in the three-way catalyst. Specific examples of the precious metal include: platinum group elements such as rhodium (Rh), palladium (Pd), platinum (Pt), ruthenium (Ru), osmium (Os), and iridium (Ir); gold (Au); and silver (Ag). These can be used alone, or two or more kinds thereof may be used in combination. In particular, from the viewpoint of the catalyst performance, at least one kind selected from the group consisting of Pt, Rh, Pd, Ir, and Ru is preferable and at least one kind selected from the group consisting of Pt, Rh, and Pd is more preferable. In a case of using two or more kinds of these, the precious metal may be an alloy of the two or more kinds of metal species.

It is preferable to use two or more kinds of the above elements in combination as the precious metal. A preferable example is a combination of Rh, which has high reduction activity, and Pd and/or Pt, which have high oxidation activity. Note that in the present specification, the expression "A and/or B" refers to one of A and B or both A and B.

The precious metal is preferably used as microparticles with sufficiently small particle diameter. The average particle diameter of the precious metal particles (specifically, average value of particle diameters of 20 or more precious metal particles obtained based on a cross-sectional image of the catalyst layer by a transmission electron microscope) is generally about 1 to 15 nm, preferably 10 nm or less, more preferably 7 nm or less, and still more preferably 5 nm or less. Thus, the contact area of the precious metal with the exhaust gas can be increased and the purification performance can be improved further.

The content of the precious metal is not limited in particular. The content of the precious metal is for example 0.05 to 10 g/L and may be 0.1 to 5 g/L per liter of the volume of a part of the base material where the catalyst layer 20 is formed along the cylinder axis direction X.

As the carrier that carries the precious metal, a known inorganic compound used for the three-way catalyst can be used and a porous carrier with a relatively large specific surface area is suitably used. In the present specification, the term "specific surface area" refers to a specific surface area measured in accordance with a BET method unless otherwise stated. Examples of the suitable carrier include alumina (Al₂O₃), ceria (CeOz), zirconia (ZrO₂), silica (SiOz), titania (TiO₂), a solid solution thereof (for example, ceria-zirconia composite oxide (CZ composite oxide), and a combination thereof. The carrier is preferably in a particulate shape (for example, alumina powder, CZ powder, or the like). The carrier particles preferably have a specific surface area of 50 to 500 m²/g (particularly, 200 to 400 m²/g) from the viewpoints of heat resistance and structure stability. Moreover, the average particle diameter of the carrier particles (specifically, average value of particle diameters of 20 or more carrier particles obtained based on a cross-sectional image of the catalyst layer by a transmission electron microscope) is preferably 1 nm or more and 500 nm or less (particularly, 10 nm or more and 200 nm or less).

The catalyst layer 20 may include a component other than the three-way catalyst as an optional component. For example, the catalyst layer 20 may include a metal species such as an alkali metal element, an alkaline earth metal element, a transition metal element, or a rare-earth element in addition to the precious metal. These elements (particularly, alkaline earth element) may be contained as an oxide, a hydroxide, a carbonate, a nitrate, a sulfate, a phosphate, an acetate, a formate, an oxalate, a halide, or the like.

Regarding the optional component, the catalyst layer 20 preferably further includes an oxygen storage capacity material (OSC material) capable of storing and releasing oxygen as a non-carrier that does not carry the precious metal. As the OSC material, a known compound that has been known as having the oxygen storage capacity may be used, and specific examples thereof include a metal oxide (Ce-containing oxide) containing ceria (CeOz), which has a high oxygen storage capacity. The Ce-containing oxide may be ceria or a composite oxide containing ceria and metal oxide other than ceria. From the viewpoints of improving the heat resistance and the durability, and the like, the Ce-containing oxide may be a composite oxide containing at least one of Zr and Al, for example, a ceria (CeOz)-zirconia (ZrO₂) composite oxide (CZ composite oxide). From the viewpoints of improving the heat resistance and the like, for example, the CZ composite oxide may further include a rare earth metal oxide such as Nd₂O₃, La₂O₃, Y₂O₃, or Pr₆O₁₀.

As other optional components of the catalyst layer 20, a binder such as alumina sol and silica sol, various kinds of additives, and the like are given.

The catalyst layer 20 may have either a single layer structure or a multilayer structure. In an example illustrated in Fig. 3, the catalyst layer 20 is a single layer. When the catalyst layer 20 has the single layer structure, the catalyst layer 20 may include a plurality of regions with different compositions, properties, or the like. In another example, the catalyst layer 20 may include a former stage part that is positioned on the upstream side in the cylinder axis direction X, and a latter stage part that is positioned on the downstream side relative to the former stage part, and the compositions and/or properties may be different between the former stage part and the latter stage part. Specifically, for example, the former stage part and the latter stage part may contain different precious metals.

When the catalyst layer 20 has the multilayer structure, the number of layers is not limited in particular. The catalyst layer 20 may have a two-layer structure including a layer on the base material side (lower layer) and a layer on a surface side (upper layer), or may have a structure of three or more layers including the layer on the base material side (lower layer), the layer on the surface side (upper layer), and one or more intermediate layers existing therebetween. In this multilayer structure, the respective layers may contain different precious metals.

As a modification of the exhaust gas purifying catalyst 10, a preferred example in the case where the catalyst layer 20 has the multilayer structure is illustrated in Fig. 4. The arrow in Fig. 4 has the same meaning as the arrow in Fig. 3. In an exhaust gas purifying catalyst 10' according to the modification illustrated in Fig. 4, a catalyst layer 20' includes a lower layer 22' corresponding to a layer on the base material 11 side, and an upper layer 24' provided on the lower layer 22'. Each of the lower layer 22' and the upper layer 24' includes a three-way catalyst. The lower layer 22' contains Pd as the precious metal in the three-way catalyst. On the other hand, the upper layer 24' contains Rh as the precious metal in the three-way catalyst. In this case, by carrying an oxidizing catalyst and a reducing catalyst with these catalysts separated from each other in a stacking direction, the deterioration of the catalyst metal (for example, firing due to particle growth) can be suppressed, so that the durability of the exhaust gas purifying catalyst can be improved.

The coating amount (that is, molding amount) of the catalyst layer 20 (and the catalyst layer 20') is not limited in particular. The coating amount is 10 to 500 g/L for example, and may be 100 to 300 g/L per liter of the volume of a part of the base material where the catalyst layer 20 is formed along the cylinder axis direction X. By satisfying the above range, both the improvement of the purification performance for the harmful components and the reduction of the pressure loss can be achieved at a high level. Moreover, the durability and the peeling resistance can be improved.

The thickness of the catalyst layer 20 is not limited in particular and may be designed as appropriate in consideration of the durability, the peeling resistance, and the like. The thickness of the catalyst layer 20 is 1 to 100 µm for example, and may be 5 to 100 µm.

The coat width (an average dimension in the cylinder axis direction X) of the catalyst layer 20 (and the catalyst layer 20') is not limited in particular and may be designed as appropriate in consideration of the size of the base material 11, the flow rate of the exhaust gas flowing in the exhaust gas purifying catalyst 10, and the like. The coat width is for example 10% to 90%, preferably 20% to 80%, and more preferably 30% to 70% of the total length of the base material in the cylinder axis direction X.

### [Reforming reaction layer]

In the exhaust gas purifying catalyst 10, the reforming reaction layer 30 is disposed at a position on the downstream side in the flowing direction of the exhaust gas relative to the catalyst layer 20. In the illustrated example, the catalyst layer 20 and the reforming reaction layer 30 are disposed in the cell 12 of the base material 11 of the exhaust gas purifying catalyst 10; therefore, the exhaust gas having passed the catalyst layer 20 can flow into the reforming reaction layer 30.

The reforming reaction layer 30 includes a hydrogen generation catalyst as an essential component. The hydrogen generation catalyst is a catalyst that causes a hydrogen generation reaction where HC and CO in the exhaust gas are converted into carbon dioxide and Hz. More specifically, the hydrogen generation catalyst uses water to convert HC and CO into H₂ by a steam reforming reaction (HC + H₂O -> COz + Hz) and a CO shift reaction (CO + H₂O -> COz + H₂).

As described above, since oxygen may be insufficient in the rich atmosphere, just the catalyst layer 20 may be unable to perform sufficient oxidation of HC and CO. Additionally, oxygen is much consumed in the upstream part in the flowing direction of the exhaust gas in the exhaust gas purifying catalyst; therefore, in the downstream part, oxygen is insufficient particularly in the case of the rich atmosphere. On the other hand, water is generated in combustion of a fuel (typically, gasoline) or oxidation of HC and therefore, exists abundantly in the exhaust gas. The reforming reaction layer 30 convers HC and CO into carbon dioxide and H₂ using water instead of oxygen as described above. Therefore, in the exhaust gas purifying catalyst 10, by disposing the reforming reaction layer 30 at a position on the downstream side in the flowing direction of the exhaust gas relative to the catalyst layer 20, HC and CO can be removed with a high purifying ratio even if oxygen is insufficient. That is to say, in the exhaust gas purifying catalyst 10 according to the present embodiment, the purification performance for HC and CO in the rich atmosphere is improved and accordingly, the hot emission can be reduced.

The hydrogen generation catalyst may be included along the cylinder axis direction X uniformly, and for example, may alternatively be included so that the content changes gradually from the upstream side toward the downstream side. For example, the hydrogen generation catalyst may be included so that the content decreases gradually from the upstream side toward the downstream side.

The hydrogen generation catalyst typically includes at least one of a rare earth oxide and a transition metal oxide (except oxide of precious metal other than Rh and Ru). Thus, the conflict with the exhaust gas purification reaction by the oxidation reaction can be avoided and the hydrogen generation reaction can be promoted.

Examples of the rare earth oxide include oxides of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu), which belong to Group 3 in the periodic table. Among these, because the reactivity is high and the hydrogen generation performance is excellent, oxides of lanthanoids are preferable, and at least one of Pr and Nd is preferable from the viewpoints of the durability, the availability, and the like.

Examples of the transition metal oxide (except oxide of precious metal other than Rh and Ru) include oxides of scandium (Sc), titanium (Ti), vanadium (V), chromium (Cr), manganese (Mn), iron (Fe), cobalt (Co), nickel (Ni), and copper (Cu), which belong to Period 4 in the periodic table, and oxides of yttrium (Y), zirconium (Zr), niobium (Nb), molybdenum (Mo), and technetium (Tc), which belong to Period 5 in the periodic table. Among these, because the reactivity is high and the hydrogen generation performance is excellent, oxides of metals in Period 4 in the periodic table are preferable, oxides of the iron group (Fe, Co, and Ni) are more preferable, and Ni is particularly preferable. From the viewpoints of the durability and the like, at least one of Co and Ni is preferable. Thus, the hydrogen generation catalyst preferably includes the oxide of at least one kind of element selected from the group consisting of Pr, Nd, Co, and Ni, more preferably includes the oxide ofNi or Pr, and still more preferably includes nickel oxide.

The reforming reaction layer 30 may contain a component other than the hydrogen generation catalyst as an optional component. In this embodiment, the reforming reaction layer 30 includes an inorganic oxide as the optional component, specifically includes an OSC material with the oxygen storage capacity and a non-OSC material without the oxygen storage capacity.

In the art disclosed herein, the OSC material has a function of promoting the hydrogen generation reaction (the steam reforming reaction and/or the CO shift reaction). The OSC material may function as a promoter. In the reforming reaction layer 30, the OSC material is suitably disposed close to the hydrogen generation catalyst. Although interpretation is not limited thereto in particular, according to presumptions by the present inventors, the OSC material has functions of dissociating H₂O in the exhaust gas and supplying the hydrogen generation catalyst with oxygen atoms. It is assumed that the hydrogen generation reaction can be promoted thereby.

As the OSC material, the material given as the examples usable for the catalyst layer 20 can be used. The CZ composite oxide may be either Ce-rich or Zr-rich. The mixing ratio of ceria in the CZ composite oxide is 10 to 90 mass% for example, and preferably 15 to 70 mass% when the entire CZ composite oxide is 100 mass%. When the mixing ratio of ceria is higher, the conversion of the harmful components into Hz can be promoted. When the mixing ratio of zirconia is higher, the heat resistance is higher. When the mixing ratio of ceria is in the above range, both the effect of the art disclosed herein and the heat resistance can be achieved at a high level.

Although not particularly limited, the content of the OSC material in the reforming reaction layer 30 is 1 to 100 g/L for example, and preferably 5 to 50 g/L per liter of the volume of a part of the base material where the reforming reaction layer 30 is formed along the cylinder axis direction X. The ratio of the content of the OSC material to the content of the hydrogen generation catalyst is, for example, 0.1 or more, 0.2 or more, 0.5 or more, 1 or more, 2 or more, and 3 or more, and for example 30 or less, 20 or less, 10 or less, and 5 or less. Thereby, the hydrogen generation reaction can be promoted, and by suppressing the coating amount of the reforming reaction layer 30, the pressure loss and the cost can be reduced.

The non-OSC material has at least one of a function of improving the heat resistance of the reforming reaction layer 30, a function of improving the durability of the reforming reaction layer 30, and a function of suppressing peeling of the reforming reaction layer 30 from the base material 11. Examples of the non-OSC material include metal oxides such as alumina (Al₂O₃), titania (TiO₂), zirconia (ZrC₂), and silica (SiOz). Among these, the metal oxide containing alumina (Al-containing oxide) is preferable because of having high heat resistance and high durability. The Al-containing oxide may be alumina or a composite oxide containing alumina and the metal oxide other than alumina (for example, rare earth metal oxide). From the viewpoints of improving the heat resistance and the durability, and the like, the Al-containing oxide is an La₂O₃-Al₂O₃ composite oxide (LA composite oxide), for example. The LA composite oxide may be either La-rich or Al-rich. From the viewpoints of suppressing deterioration due to long use and the like, the mixing ratio of the metal oxide other than alumina in the LA composite oxide is less than 50 mass% for example, and may be 0.1 to 20 mass% when the entire LA composite oxide is 100 mass%.

Although not particularly limited, the content of the non-OSC material in the reforming reaction layer 30 may be less than the content of the OSC material. The content of the non-OSC material is 1 to 100 g/L for example, and may be 5 to 50 g/L per liter of the volume of a part of the base material where the reforming reaction layer 30 is formed along the cylinder axis direction X.

The hydrogen generation catalyst typically has a particulate shape. It is preferable that the particles of the hydrogen generation catalyst (particularly, particles of nickel oxide (NiOx)) be not carried by the carrier. The optional component such as the OSC material or the non-OSC material can serve as the carrier. In other words, the particles of the hydrogen generation catalyst preferably exist independently from the optional component such as the OSC material or the non-OSC material. In a case where the hydrogen generation catalyst is carried by the carrier, the hydrogen generation catalyst is easily influenced by interaction with the carrier (particularly, ceria in the OSC material). Therefore, it becomes difficult for the metal element (particularly Ni) in the hydrogen generation catalyst to become stable in the state of the metal, and the steam reforming reaction and the CO shift reaction occur less easily. Accordingly, when the particles of the hydrogen generation catalyst are not carried by the carrier, thereby the metal element (particularly Ni) in the hydrogen generation catalyst becomes stable easily in the state of the metal, and thus, the steam reforming reaction and the CO shift reaction can be promoted.

The average particle diameter of the hydrogen generation catalyst (specifically, the average value of the particle diameters of 20 or more particles obtained by electron microscope observation) is preferably 1 µm or more, without particular limitations. In this case, the metal element (particularly Ni) in the hydrogen generation catalyst becomes stable more easily in the state of the metal, and accordingly the steam reforming reaction and the CO shift reaction can be promoted more. On the other hand, the average particle diameter of the hydrogen generation catalyst is preferably smaller than the average particle diameter of the OSC material and/or the non-OSC material. Thereby, stable activity can be maintained. The average particle diameter of the hydrogen generation catalyst is preferably 1 µm or more and 9 µm or less, and more preferably 1 µm or more and 5 µm or less.

The content of the hydrogen generation catalyst in the reforming reaction layer 30 is not limited in particular. As the hydrogen generation catalyst is contained more, the purification performance for CO and HC tends to be higher. Accordingly, the content of the hydrogen generation catalyst is preferably 5 g/L or more, more preferably 10 g/L or more, still more preferably 20 g/L or more, and the most preferably 30 g/L or more per liter of the volume of the base material of a part where the reforming reaction layer 30 is formed along the cylinder axis direction X.

On the other hand, from the viewpoint of suppressing the excessive reduction of the harmful components (for example, NOx is excessively reduced to generate ammonia), the content of the hydrogen generation catalyst is for example 100 g/L or less, preferably 80 g/L or less, and more preferably 60 g/L or less per liter of the volume of the base material of a part where the reforming reaction layer 30 is formed along the cylinder axis direction X.

The reforming reaction layer 30 may be formed by the hydrogen generation catalyst, the OSC material, and the non-OSC material, and may further include an optional component. For example, when the reforming reaction layer 30 includes the OSC material, the reforming reaction layer 30 may include an alkaline-earth element such as calcium (Ca), barium (Ba), or strontium (Sr). Thereby, in the lean atmosphere, the oxygen storage amount of the OSC material can be increased. Moreover, being poisoned in the rich atmosphere is suppressed, and the activity of the hydrogen generation catalyst can be stably maintained.

In a preferred aspect of the reforming reaction layer 30, the reforming reaction layer 30 does not contain the precious metal. In the case where the reforming reaction layer 30 includes the precious metal, the effect of improving the purification performance for CO and HC in the exhaust gas purifying catalyst 10 decreases. This is because CO and HC are adsorbed to the precious metal and purification of these by the hydrogen generation catalyst is interrupted.

On the other hand, in another preferred aspect of the reforming reaction layer 30, the reforming reaction layer 30 contains Rh. Rh is the precious metal and the effect of improving the purification performance for CO and HC in the exhaust gas purifying catalyst 10 decreases; however, regarding Rh, the degree of the decrease of this effect is very small. On the other hand, Rh can purify NOx. Therefore, in the case of considering the purification performance for the entire harmful components (that is, CO, HC, and NOx), in other words, in the case of removing CO, HC, and NOx with a high purifying ratio in a well-balanced manner, the reforming reaction layer 30 can contain Rh in spite of the fact that Rh is the precious metal. Accordingly, in this aspect, it is preferable that the reforming reaction layer 30 do not contain the precious metal other than Rh.

As other optional components of the reforming reaction layer 30, a binder such as alumina sol and silica sol, various kinds of additives, and the like are given.

In the reforming reaction layer 30, the hydrogen generation catalyst may constitute a main body (that is, the component that occupies 50 mass% or more of the whole), or the OSC material or the non-OSC material may constitute the main body. From the viewpoints of suppressing the firing by increasing the dispersibility of the hydrogen generation catalyst, and the like, the main body of the reforming reaction layer 30 may be the OSC material and/or the non-OSC material (when both the OSC material and the non-OSC material are included, the main body may be the total of them). Although not particularly limited, from the viewpoints of suitably exerting the effect of the art disclosed herein in a long term and the like, the content ratio of the hydrogen generation catalyst is for example 5 to 90 mass%, and preferably 10 to 70 mass% when the entire reforming reaction layer 30 is 100 mass%. Moreover, from the viewpoints of promoting the hydrogen generation reaction and the like, the content ratio of the OSC material is for example 1 to 70 mass%, and preferably 5 to 65 mass%. Furthermore, from the viewpoints of improving the heat resistance, the durability, and the peeling resistance, and the like, the content ratio of the non-OSC material is for example 10 mass% or more, preferably 25 mass% or more, and more preferably 30 to 50 mass%.

The coating amount (molding amount) of the reforming reaction layer 30 is not limited in particular. The coating amount may be for example 10 to 200 g/L, and may be 50 to 100 g/L per liter of the volume of a part of the base material where the reforming reaction layer 30 is formed along the cylinder axis direction X. By satisfying the above range, the effect of the art disclosed herein can be achieved stably at the high level for a long time.

The average thickness of the reforming reaction layer 30 is not limited in particular and may be set as appropriate in consideration of the durability, the peeling resistance, and the like. The average thickness of the reforming reaction layer 30 is for example 1 to 100 µm and may be 5 to 100 µm.

The coat width (the average dimension in the cylinder axis direction X) of the reforming reaction layer 30 is not limited in particular and may be designed as appropriate in consideration of the size of the base material 11, the flow rate of the exhaust gas flowing in the exhaust gas purifying catalyst 10, and the like. The coat width of the reforming reaction layer 30 is for example 10% to 90%, preferably 20% to 80%, and more preferably 30% to 70% of the total length of the base material in the cylinder axis direction X.

### <<Manufactuiing method for exhaust gas purifying catalyst 10>>

The exhaust gas purifying catalyst 10 can be manufactured by the following method, for example. That is to say, first, the base material 11, a slurry for catalyst layer formation that is used for forming the catalyst layer 20, and a slurry for reforming reaction layer formation that is used for forming the reforming reaction layer 30 are prepared. The slurry for the catalyst layer formation may be the same as or similar to the conventionally known slurry for the catalyst layer formation that is used for forming the catalyst layer including the three-way catalyst. For example, the slurry for the catalyst layer formation can be prepared by dispersing a precious metal source (for example, a solution including the precious metal as an ion), a carrier, and an optional component (such as the binder or various additives) in a dispersion medium.

Regarding the slurry for the reforming reaction layer formation, an oxide that is the hydrogen generation catalyst or a compound to be converted into an oxide that is the hydrogen generation catalyst by firing (for example, a nitrate, a carbonate, an oxalate, a hydroxide, or the like of a rare earth metal or a transition metal) can be used as a hydrogen generation catalyst source. For example, the slurry for the catalyst layer formation can be prepared by dispersing the hydrogen generation catalyst source and an optional component (the OSC material, the non-OSC material, the binder, various additives, or the like) in a dispersion medium. Here, in a case where the hydrogen generation catalyst is nickel oxide (NiOx) in particular, the average particle diameter is preferably 5 µm or more.

Next, the slurry for the catalyst layer formation and the slurry for the reforming reaction layer formation are applied on the base material 11. These slurries can be applied by a conventional method, for example, an impregnation method, a wash-coating method, or the like. In one example, first, the slurry for the catalyst layer formation prepared as above is poured into the cells 12 from an end part of the base material 11 on the inlet 10a side, supplied to a predetermined length along the cylinder axis direction X, and then dried. Subsequently, the slurry for the reforming reaction layer formation is poured into the cells 12 from an end part of the base material 11 on the outlet 10b side, supplied to a predetermined length along the cylinder axis direction X, and then dried. Next, the base material 11 to which these slurries have been supplied is fired at a predetermined temperature for a predetermined length of time. A firing method may be the same as or similar to the conventional one. Thereby, the catalyst layer 20 and the reforming reaction layer 30 can be formed on the base material 11. The exhaust gas purifying catalyst 10 can be formed in this manner.

### <<Application of exhaust gas purifying catalyst 10»

The exhaust gas purifying catalyst 10 can be used suitably for purifying the exhaust gas emitted from the internal-combustion engines of, in addition to vehicles such as an automobile and a truck, a motorcycle, and a bicycle with a motor; marine products such as a vessel, a tanker, a water bike, a personal watercraft, and an outboard motor; garden products such as a mowing machine, a chain saw, and a trimmer; leisure products such as a golf cart and a four-wheeled buggy; generator sets such as a cogeneration system; an incinerator, and the like. Especially, the exhaust gas purifying catalyst 10 can be used suitably for vehicles such as an automobile.

Test Examples about the present invention are hereinafter described but it is not intended to limit the present invention to Test Examples below. Noted that in Test Examples below, the unit "g/L" refers to the content per liter of the volume of a part of the base material where a predetermined layer is formed in the cylinder axis direction.

### [Test Example 1] Examination of reforming reaction layer including hydrogen generation catalyst

First, a honeycomb base material with a cylindrical shape (made of cordierite, capacity: 1.2 L, diameter of base material: 118 mm, and total length of base material: 112 mm) was prepared. Next, the following three kinds of slurries were prepared. As the OSC material, ceria-zirconia composite oxide containing La, Pr, Nd, and Y as the additive components was used. As the non-OSC material, alumina composite oxide containing La was used.
(A) A slurry for reforming reaction layer formation: the OSC material, the non-OSC material, nickel oxide as the hydrogen generation catalyst (average particle diameter: 8 µm), barium sulfate, and an alumina-based binder were mixed together with distilled water. The mixed solution was milled to control the particle diameter and thereby, the slurry for the reforming reaction layer formation was prepared.
(B) A Pd slurry for catalyst lower layer formation: the OSC material, the non-OSC material, a Pd nitrate aqueous solution, barium sulfate, and an alumina-based binder were mixed together with distilled water. The mixed solution was milled to control the particle diameter and thereby, the Pd slurry for the catalyst lower layer formation was prepared.
(C) A Rh slurry for catalyst upper layer formation: the OSC material, the non-OSC material, a Rh hydrochloric acid aqueous solution, and an alumina-based binder were mixed together with distilled water. The mixed solution was milled to control the particle diameter and thereby, the Rh slurry for the catalyst upper layer formation was prepared.

### [Comparative Example 1]

The Pd slurry for the catalyst lower layer formation was poured from the front side of the base material (an end part side on the exhaust gas inflow side) and sucked by a blower, thereby coating a part corresponding to 100% of the total length of the base material in the cylinder axis direction. The coating amount of the Pd slurry was set so that the content of Pd was 0.14 g/L. Then, this was heated and dried at 250°C in a drying machine for one hour, which was followed by one-hour firing at 500°C in an electric furnace. Thus, the lower layer of the catalyst layer was formed.

Next, the Rh slurry for the upper layer formation was poured from the front side of the base material and sucked by a blower, thereby coating a part corresponding to 100% of the total length of the base material in the cylinder axis direction. The coating amount of the Rh slurry was set so that the content of Rh was 0.07 g/L. Then, this was heated and dried at 250°C in a drying machine for one hour, which was followed by one-hour firing at 500°C in an electric furnace. Thus, the lower layer of the catalyst layer was formed. In this manner, an exhaust gas purifying catalyst according to Comparative Example 1 without the reforming reaction layer was obtained.

### [Comparative Example 2]

The slurry for the reforming reaction layer formation was poured from the front side of the base material and sucked by a blower for the coating. The coat width was set so as to correspond to 50% of the total length of the base material in the cylinder axis direction and the coating amount was set so that the content of the hydrogen generation catalyst became 48 g/L in terms of nickel oxide. Then, drying by heat was performed at 250°C in a drying machine for one hour, which was followed by one-hour firing at 500°C in an electric furnace. Thus, the reforming reaction layer was formed on a surface of a front part of the base material.

Next, the Pd slurry for the catalyst lower layer formation was poured from the rear side of the base material (an end part side on the exhaust gas outflow side) and sucked by a blower for the coating. The coat width was set so as to correspond to 50% of the total length of the base material in the cylinder axis direction and the coating amount was set so that the content of Pd became 0.14 g/L. Then, drying by heat was performed at 250°C in a drying machine for one hour, which was followed by one-hour firing at 500°C in an electric furnace. Thus, the lower layer of the catalyst layer was formed on a surface of a rear part of the base material.

Next, the Rh slurry for the upper layer formation was poured from the rear side of the base material and sucked by a blower for the coating. The coat width was set so as to correspond to 50% of the total length of the base material in the cylinder axis direction and the coating amount was set so that the content of Rh became 0.07 g/L. Then, drying by heat was performed at 250°C in a drying machine for one hour, which was followed by one-hour firing at 500°C in an electric furnace. Thus, the upper layer of the catalyst layer was formed on the formed lower layer. In this manner, an exhaust gas purifying catalyst according to Comparative Example 2 with the reforming reaction layer in the front part was obtained.

### [Example 1]

The Pd slurry for the catalyst lower layer formation was poured from the front side of the base material and sucked by a blower for the coating. The coat width was set so as to correspond to 50% of the total length of the base material in the cylinder axis direction and the coating amount was set so that the content of Pd became 0.14 g/L. Then, drying by heat was performed at 250°C in a drying machine for one hour, which was followed by one-hour firing at 500°C in an electric furnace. Thus, the lower layer of the catalyst layer was formed on the surface of the front part of the base material.

Next, the Rh slurry for the upper layer formation was poured from the front side of the base material and sucked by a blower for the coating. The coat width was set so as to correspond to 50% of the total length of the base material in the cylinder axis direction and the coating amount was set so that the content of Rh became 0.07 g/L. Then, drying by heat was performed at 250°C in a drying machine for one hour, which was followed by one-hour firing at 500°C in an electric furnace. Thus, the upper layer of the catalyst layer was formed on the formed lower layer.

Next, the slurry for the reforming reaction layer formation was poured from the rear side of the base material and sucked by a blower for the coating. The coat width was set so as to correspond to 50% of the total length of the base material and the coating amount was set so that the content of the hydrogen generation catalyst became 48 g/L in terms of nickel oxide. Then, drying by heat was performed at 250°C in a drying machine for one hour, which was followed by one-hour firing at 500°C in an electric furnace. Thus, the reforming reaction layer was formed on the surface of the rear part of the base material. In this manner, an exhaust gas purifying catalyst according to Example 1 with the reforming reaction layer in the rear part was obtained.

### [Evaluation of CO and HC purification performance]

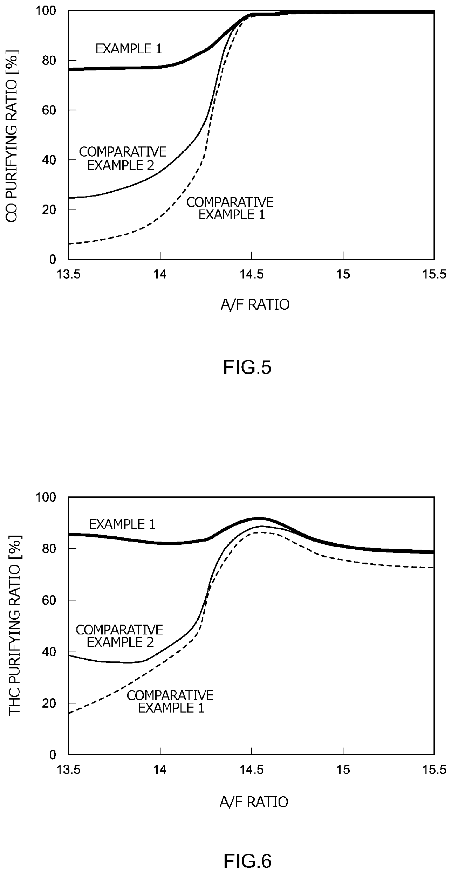

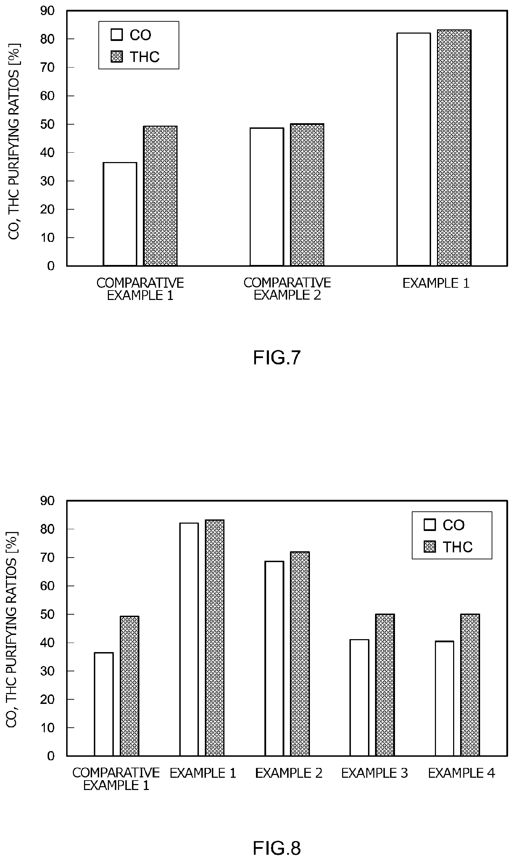

The CO purification performance and the HC purification performance of the exhaust gas purifying catalyst manufactured as above were evaluated using a catalyst evaluation apparatus including a gasoline engine (2.5 L-NA engine). Specifically, the exhaust gas purifying catalyst manufactured as above was set in the catalyst evaluation apparatus, the inflow gas temperature was set to 520°C, and simulated exhaust gas with the air-fuel ratio (A/F) varied was supplied to the engine. On the basis of the ratio between the CO or HC concentration of the inflow gas to the exhaust gas purifying catalyst and the CO or HC concentration of the outflow gas from the exhaust gas purifying catalyst, a CO purifying ratio and an HC purifying ratio were obtained. Note that the HC purifying ratio was obtained as a total hydrocarbon (THC) purifying ratio. The results are shown in Fig. 5 and Fig. 6. A graph in Fig. 7 expresses the comparison of the CO purifying ratio and the THC purifying ratio in the rich atmosphere (A/F = 14.2).

From the results in Fig. 5 to Fig. 7, it can be understood that the remarkably high CO purifying ratio and THC purifying ratio were obtained even in the rich atmosphere when the catalyst layer was provided in the front part and the reforming reaction layer was provided in the rear part (Example 1). This is because the Oz concentration is low in the rear part and the reforming reaction (hydrogen generation reaction) proceeds efficiently in the reforming reaction layer of the rear part.

On the other hand, the improvement of the CO purifying ratio and the THC purifying ratio in the rich atmosphere was small when the reforming reaction layer was provided in the front part and the catalyst layer was provided in the rear part (Example 1). This is because the Oz concentration is sufficiently high in the front part and the oxidation reaction progresses with priority even in the reforming reaction layer of the front part, so that the reforming reaction (hydrogen generation reaction) does not progress efficiently.

### [Test Example 2] Examination of type of hydrogen generation catalyst

### [Example 2]

An exhaust gas purifying catalyst according to Example 2 was obtained in a manner similar to Example 1 except that the hydrogen generation catalyst source included in the slurry for the reforming reaction layer formation was changed to Pr nitrate and the coating amount thereof was changed to 30 g/L in terms of praseodymium oxide.

### [Example 3]

An exhaust gas purifying catalyst according to Example 3 was obtained in a manner similar to Example 1 except that the hydrogen generation catalyst source included in the slurry for the reforming reaction layer formation was changed to Cu nitrate and the coating amount thereof was changed to 30 g/L in terms of copper oxide.

### [Example 4]

An exhaust gas purifying catalyst according to Example 4 was obtained in a manner similar to Example 1 except that the hydrogen generation catalyst source included in the slurry for the reforming reaction layer formation was changed to Mg nitrate and the coating amount thereof was changed to 30 g/L in terms of magnesium oxide.

### [Evaluation of CO and HC purification performance]

Regarding the exhaust gas purifying catalyst according to each of Examples 2 to 4, the CO purifying ratio and the THC purifying ratio were measured similarly to the aforementioned manner. Fig. 8 is a graph expressing the comparison between the CO purifying ratio and the THC purifying ratio in the rich atmosphere (A/F = 14.2) for these. Note that the graph also shows the results in Comparative Example 1 and Example 1.

As shown in Fig. 8, it can be understood that the CO purifying ratio and the THC purifying ratio are particularly high when the metal species of the hydrogen generation catalyst are Ni and Pr. Of Ni and Pr, Ni achieved the higher CO purifying ratio and THC purifying ratio.

### [Test Example 3] Examination of addition amount of hydrogen generation catalyst

### [Example 5]

An exhaust gas purifying catalyst according to Example 5 was obtained in a manner similar to Example 1 except that the coating amount of the slurry for the reforming reaction layer formation was changed to 10 g/L in terms of nickel oxide.

### [Example 6]

An exhaust gas purifying catalyst according to Example 6 was obtained in a manner similar to Example 1 except that the coating amount of the slurry for the reforming reaction layer formation was changed to 30 g/L in terms of nickel oxide.

### [Example 7]

An exhaust gas purifying catalyst according to Example 7 was obtained in a manner similar to Example 1 except that the coating amount of the slurry for the reforming reaction layer formation was changed to 50 g/L in terms of nickel oxide.

### [Evaluation of CO and HC purification performance]

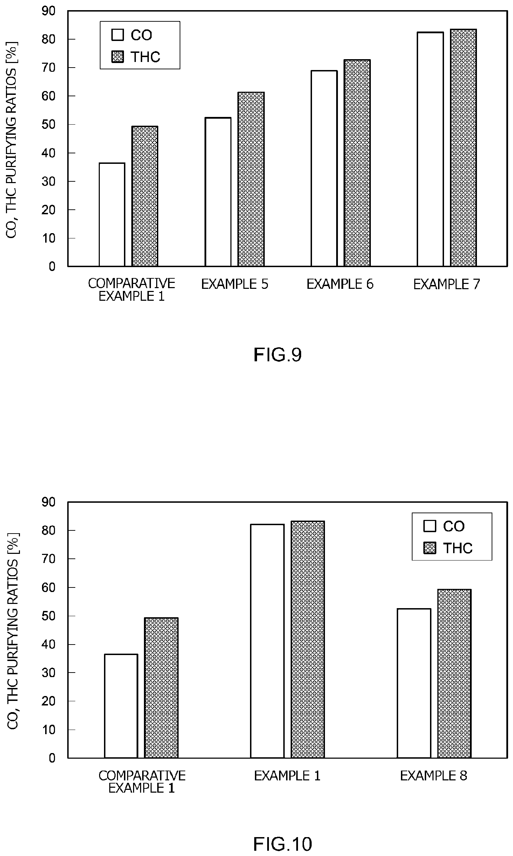

Regarding the exhaust gas purifying catalyst according to each of Examples 5 to 7, the CO purifying ratio and the THC purifying ratio were measured similarly to the aforementioned manner. Fig. 9 is a graph expressing the comparison between the CO purifying ratio and the THC purifying ratio in the rich atmosphere (A/F = 14.2) for these. Note that the graph also shows the result in Comparative Example 1.

From the result in Fig. 9, it can be understood that as the coating amount of the hydrogen generation catalyst increases, the CO purifying ratio and the THC purifying ratio increase, and when the coating amount is 5 g/L or more, a very high effect of improving the CO purifying ratio and the THC purifying ratio can be obtained.

### [Test Example 4] Examination of hydrogen generation catalyst source

### [Example 8]

An exhaust gas purifying catalyst according to Example 8 was obtained in a manner similar to Example 1 except that Ni nitrate was used instead of nickel oxide as the hydrogen generation catalyst source in the slurry for the reforming reaction layer formation. The coating amount of the hydrogen generation catalyst in terms of nickel oxide was the same in Example 8 and in Example 1.

### [Evaluation of CO and HC purification performance]

Regarding the exhaust gas purifying catalyst according to Example 8, the CO purifying ratio and the THC purifying ratio were measured similarly to the aforementioned manner. Fig. 10 is a graph expressing the comparison between the CO purifying ratio and the THC purifying ratio in the rich atmosphere (A/F = 14.2) regarding Example 1, Comparative Example 1, and Comparative Example 8.

From the result in Fig. 10, it can be understood that the higher CO purifying ratio and THC purifying ratio were obtained when nickel oxide particles were used rather than Ni nitrate as the hydrogen generation catalyst source included in the slurry for the reforming reaction layer formation. In the case of using Ni nitrate as the hydrogen generation catalyst source (Example 8), the hydrogen generation catalyst is carried on the carrier in a manner of being dispersed at a high degree. Therefore, the hydrogen generation catalyst is easily affected by interaction with the carrier (particularly, ceria in the OSC material). This makes the oxidation reaction progress more easily but it becomes difficult for Ni to become stable in the state of the metal and the reforming reaction progresses less easily. On the other hand, in the case of using nickel oxide as the hydrogen generation catalyst source (Example 1), the interaction with the carrier does not occur; thus, it becomes easy for Ni to become stable in the state of the metal and the reforming reaction progresses easily. Due to this, using the nickel oxide particles as the hydrogen generation catalyst source makes the CO purifying ratio and the THC purifying ratio higher. Additionally, as the nickel oxide particles are larger, Ni is more stable in the state of the metal; therefore, it is preferable that the median diameter of the nickel oxide particles be larger (specifically, 1 µm or more and 9 µm or less, particularly 1 µm or more and 5 µm or less).

### [Test Example 5] Examination of combined use of hydrogen generation catalyst and precious metal

### [Example 9]

An exhaust gas purifying catalyst according to Example 9 was obtained in a manner similar to Example 1 except that Pd nitrate was added to the slurry for the reforming reaction layer formation so that the coating amount became 0.14 g/L in terms of Pd.

### [Example 10]

An exhaust gas purifying catalyst according to Example 9 was obtained in a manner similar to Example 1 except that dinitrodiammineplatinum was added to the slurry for the reforming reaction layer formation so that the coating amount became 0.14 g/L in terms of Pt.

### [Example 11]

An exhaust gas purifying catalyst according to Example 9 was obtained in a manner similar to Example 1 except that Rh hydrochloric acid was added to the slurry for the reforming reaction layer formation so that the coating amount became 0.07 g/L in terms of Rh.

### [Evaluation of CO and HC purification performance]

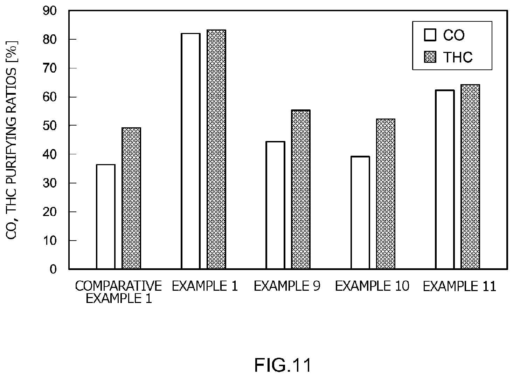

Regarding the exhaust gas purifying catalyst according to each of Examples 9 to 11, the CO purifying ratio and the THC purifying ratio were measured similarly to the aforementioned manner. Regarding these, Fig. 11 is a graph expressing the comparison between the CO purifying ratio and the THC purifying ratio in the rich atmosphere (A/F = 14.2). Note that the graph also shows the results in Comparative Example 1 and Example 1.

As shown by the results in Fig. 11, it is understood that the effect of improving the CO purifying ratio and the THC purifying ratio is smaller in the case where Pd and Pt coexist in the reforming reaction layer (Examples 9 and 10) than in the case where Pd and Pt do not coexist (Example 1). This is because CO and HC are adsorbed in a large quantity on Pd and Pt and thereby, the reforming reaction by the hydrogen generation catalyst is interrupted.

In the case where Rh coexisted in the reforming reaction layer, the decrease of the CO purifying ratio and the THC purifying ratio was small. This is because Rh adsorbs CO and HC but promotes the reforming reaction in the rich atmosphere; thus, as a whole, the reforming reaction is not interrupted largely. Accordingly, in the case where the precious metal coexists, the effect of improving the CO purifying ratio and the THC purifying ratio is small but in the case where the precious metal is Rh, it can be said that the coexistence with the hydrogen generation catalyst is possible.

Although specific examples of the present invention have been described in detail above, they are merely examples and do not limit the scope of claims. The techniques described in the scope of claims include those in which the specific examples exemplified above are variously modified and changed.

## Claims

1. An exhaust gas purifying catalyst comprising:
a base material;
a catalyst layer provided on the base material; and
a reforming reaction layer provided on the base material, wherein
the catalyst layer includes a three-way catalyst,
the reforming reaction layer includes a hydrogen generation catalyst, and
the reforming reaction layer is disposed at a position on a downstream side in a flowing direction of an exhaust gas relative to the catalyst layer.

2. The exhaust gas purifying catalyst according to claim 1, wherein the hydrogen generation catalyst includes an oxide of at least one kind of element selected from the group consisting of Pr, Nd, Co, and Ni.

3. The exhaust gas purifying catalyst according to claim 1 or 2, wherein the hydrogen generation catalyst includes nickel oxide.

4. The exhaust gas purifying catalyst according to any one of claims 1 to 3, wherein the reforming reaction layer further includes an OSC material with oxygen storage capacity.

5. The exhaust gas purifying catalyst according to any one of claims 1 to 4, wherein a content of the hydrogen generation catalyst in the reforming reaction layer is 5 g/L or more per liter of a volume of a part of the base material where the reforming reaction layer is formed.

6. The exhaust gas purifying catalyst according to any one of claims 1 to 5, wherein the reforming reaction layer further includes Rh.
